# EUROPEAN PATENT APPLICATION

(11) **EP 4 421 050 A1**
(43) Date of publication of application: **28.08.2024**
(21) Application number: 23305237.2
(22) Date of filing: 22.02.2023
(51) Int. Cl.: C04B 33/04, B01J 19/30, C02F 3/10, C04B 33/13, C04B 33/32, C04B 38/00

(54) **CERAMICS AND METHODS OF THEIR MANUFACTURE**

(71) Applicant: ImerTech SAS, 75015 Paris (FR)
(72) Inventor: CALLIET, Sophie, 31270 CUGNAUX (FR); DARRACQ, Guillaume, 31450 Montgiscard (FR); BENNAI, Nidal, 31200 Toulouse (FR)
(74) Representative: Haseltine Lake Kempner LLP

(57) **Abstract**

Lightweight porous ceramics for use in wastewater treatment, processes for their production and methods of their use are provided. The ceramics are especially suitable to replace the plastic beads that are currently used in biological aerated flooded filter systems (BAFFs) in wastewater treatment plants.

## Description

### FIELD OF INVENTION

The present invention relates to ceramics for biological wastewater treatment.

### BACKGROUND

Wastewater from sewage, storm run-off, industrial run-off and other sources undergoes various treatment processes to meet environmental standards for discharge into waterways and seas. One treatment stage involves biological treatment. Bacteria attach to a buoyant media that is fluidized and set in motion with water and air. Unwanted pollutants (e.g. nitrogen, carbon and phosphorous) in the wastewater are digested by the bacteria, thereby performing a cleaning function on the wastewater.

In use today are wastewater treatment plants known as BAFs or BAFFs: biological aerated (flooded) filters. In these systems, plastic beads of approximate diameter 3 mm and with a textured surface are utilized as the support media for bacteria. These plastic beads are textured to increase the available surface area for biofilm attachment. Commercially this media is sold as BIOBEADS (RTM).

Plastic media used in water treatment are environmentally problematic. The plastic media escape to waterways in a variety of means and to the land environment, for example via sludge disposal. The consequences of plastics in the aquatic environment are well-documented, for example toxic accumulation in the food chain.

On the other hand, untreated wastewater is also problematic for the environment. BAFFs are more compact than alternative biological treatment plants and it would be desirable to replace the plastic media with a more environmentally acceptable mineral media.

The present invention addresses these needs.

### SUMMARY

The invention provides a composition for production of a ceramic for wastewater treatment. The composition comprises three components, A, B and C, which are each different to one another. Component A is clay comprising up to about 50 wt. % of decomposable content, based on the total weight of component A. Component B is inorganic microspheres, which make up from about 30 to about 60 wt. %. of the composition, based on the total weight of the composition, and which have a particle size distribution, d₉₀, of from about 270 µm to about 700 µm. Component C is an inorganic binder. The inorganic binder is a material other than component B.

Component A may comprise from about 0.1 to about 50 wt. % of decomposable content, such as from about 5 to about 30 wt. % of decomposable content, such as from about 10 to about 30 wt. % of decomposable content, such as from about 20 to about 30 wt. % of decomposable content.

The decomposable content in component A may comprise one or more of coal, diatomaceous earth, calcium carbonate, magnesium oxide and magnesium carbonate. The coal may be one or more of lignite, sub-bituminous, bituminous, and anthracite. In some embodiments, component A is clay and comprises up to about 30 wt. % coal (e.g., lignite), such as from about 10 to about 30 wt. % coal (e.g., lignite), such as from about 20 to about 30 wt. % coal (e.g., lignite).

The composition comprises from about 20 to about 60 wt. % of component B, based on the total weight of the composition, such as from about 30 to about 50 wt. % of component B, such as from about 35 to about 45 wt. % of component B.

The fusion temperature of component B may be at least about 1100 °C, such as from about 1110 °C to about 1250 °C.

Component B may comprise one or more materials selected from perlite microspheres, mullite microspheres and fly ash cenospheres. In some embodiments, component B is perlite microspheres.

Component C may comprise silica. Component C may be derived from any suitable source, such as feldspar, glass frit, raw perlite, and wollastonite. Preferably, component C may be feldspar, glass frit, raw perlite, and/or wollastonite. Raw perlite is perlite that has not undergone any treatment other than to reduce its size. Raw perlite is non-expanded perlite.

Component C may have a particle size distribution, d₉₀, of from about 20 µm to about 100 µm.

The composition may comprise from about 5 to about 20 wt. % of component C, based on the total weight of the composition, such as from about 10 to about 20 wt. % of component C.

The composition may comprise from about 35-55 wt. % component A, 40-60 wt. % component B with the balance component C, provided that component C constitutes at least 3 wt. % of the composition and the total amount of A, B and C sums to 100 wt. %.

The composition may comprise from about 40-50 wt. % component A, 45-55 wt. % component B with the balance component C, provided that component C constitutes at least 3 wt. % of the composition, for example, 5-20 wt. %, for example 5-15 wt. % or 5-10 wt. %, and the total amount of A, B and C sums to 100 wt. %.

The composition may comprise from about 40-45 wt. % component A, 48-52 wt. % component B with the balance component C, provided that component C constitutes at least 4 wt. % of the composition, for example, 5-20 wt. %, for example 5-15 wt. % or 5-10 wt. %, and the total amount of A, B and C sums to 100 wt. %.

The composition, for example, the compositions described immediately above, may comprise component A having a d₉₀ of from about 10 µm to about 70 µm; component B having a d₉₀ of from about 270 µm to about 700 µm; and component C having d₉₀ of from about 10 µm to about 100 µm.

The composition, for example, the compositions described immediately above, may comprise component A having d₉₀ of from about 20 µm to about 60 µm; component B having d₉₀ of from about 270 µm to about 700 µm; and component C having d₉₀ of from about 10 µm to about 70 µm.

The composition, for example, the compositions described immediately above, may comprise component A having a d₉₀ of from about 30 µm to about 40 µm; component B having d₉₀ of from about 270 µm to about 700 µm; and component C having d₉₀ of from about 20 µm to about 40 µm.

The composition, for example, the compositions described immediately above, may comprise clay with 20 to 30 wt. % lignite as component A; perlite microspheres as component B; and glass frit as component C.

The invention also provides a ceramic made from the composition of the invention.

The ceramic of the invention is suitable for wastewater treatment. The ceramic has an apparent density of no greater than about 0.95 g/cm³. The ceramic may have an apparent density of at least about 0.50 g/cm³, such as at least 0.60 g/cm³.

The ceramic may take any suitable shape, such as beads, pellets, granules, discs, or another shape. The ceramic may be in the form of beads. The beads may be any suitable shape, for example spherical, hemispherical, prismatic, a ring or an irregular shape. The beads may have a largest dimension in the range about 0.5 cm to about 10 cm, such as about 0.5 cm to about 5 cm, such as about 1 cm to about 5 cm. The largest dimension for a spherical or hemispherical bead is the diameter. For a prismatic shape it is the largest straight-line distance between diagonally opposite vertices. For a ring it is the largest ring diameter. For an irregular shape it is the largest straight-line distance which lies wholly within the body of the shape.

The ceramic may have an attrition loss of less than about 10 wt. %, such as less than about 8 wt. %, as described according to the attrition loss method described herein.

The ceramic may have a water absorption index of from about 30 to about 65 wt. %.

The ceramic may have one or both of open porosity and closed porosity; preferably the ceramic has both open porosity and closed porosity.

The invention also provides use of the ceramic for treating wastewater.

The invention also provides a process for making a ceramic. The process comprises mixing components A, B and C as defined above with water to form a shapable mass, followed by shaping, drying and firing to form a ceramic. The firing temperature is suitably below the fusion temperature of component B. The firing temperature may be no greater than about 1200 °C, such as no greater than about 1100 °C. The firing time may be no greater than 180 minutes, such as no greater than 120 minutes.

The invention also provides a method of treating wastewater. The method comprises fluidizing a ceramic as defined above with wastewater and air in a biological aerated flooded filter system.

### BRIEF DESCRIPTION OF DRAWINGS

Figure 1 shows attrition loss relative to wt. % component C.
Figure 2 shows attrition loss relative to firing conditions for a single composition.

### DETAILED DESCRIPTION

"Attrition loss" refers to weight loss over time due to inter-bead and bead-container impact. A method for its measurement is described in the examples. This method is a modified version of ISO 12902:2004 standard, Annex A.

"Decomposable content" as used herein refers to a sub-component of clay. This sub-component decomposes during firing to form the ceramic. The mechanism of decomposition depends on the composition of the decomposable content, for example a carbonate, a carbide, or a carbonaceous material. The decomposable content may be organic, such as coal, or inorganic, such as magnesium carbonate. Without wishing to be bound be theory, it is believed that the decomposable content upon firing forms a gaseous material, for example, CO₂ in the case carbonaceous and carbonate materials, which leads to the creation of porosity in the final ceramic.

Brackish water at room temperature is water with a total soluble salt content of between 1 g/L and 10 g/L at 25°C.

Porosity (open and closed) can be determined by combining results from Helium pycnometer measurement on crushed and uncrushed ceramic beads and Archimede's method for the determination of the apparent density and water absorption (following the standard method applied on ceramic tiles ISO 10545-3:2018).

Water absorption index and apparent density are measured according to ISO 10545-3:2018.

### Composition

The composition for making a ceramic has three essential components: A, B and C.

### Component A

Component A is clay comprising up to about 50 wt. % of decomposable content, based on the total weight of component A, for example, from about 0.1 to about 50 wt. % of decomposable content. The clay may comprise from 0.1 to about 30 wt. % decomposable content, such as from about 5 to about 30 wt. % decomposable content, such as from about 10 to about 30 wt. % decomposable content, such as from about 20 to about 30 wt. % decomposable content.

Clay is hydrateous aluminosilicate with a lamellar structure, for example clay may be kaolinite, montmorillonite, smectite, attapulgite, and/or sepiolite.

The decomposable content may be organic, mineral, or both organic and mineral. The purpose of the decomposable content is to create porosity during firing of the ceramic. For example, the decomposable content may comprise one or more of coal, diatomaceous earth, calcium carbonate and magnesia. These decomposable materials degrade to generate gaseous byproducts during firing, which creates porosity. In embodiments, component A comprises clay and from about 20 to about 30 wt. % coal, such as lignite.

The decomposable content may be an inherent sub-component of clay, or it may be separately added.

The porosity generated by the decomposable content in component A may be open or closed porosity.

Component A is particulate. Component A may have a particle size distribution that facilitates formation of a homogeneous mixture when components A, B and C are combined. Component A may have particle size distribution with a d₉₀ less than about 70 µm, such as a d₉₀ less than about 65 µm, such as a d₉₀ less than about 50 µm, such as d₉₀ less than about 40 µm. Component A may have a d₉₀ of at least about 10 µm, such as a d₉₀ of at least about 20 µm, such as a d₉₀ of at least about 30 µm. Component A may have a d₉₀ of from about 20 µm to about 70 µm, such as a d₉₀ of from about 30 to about 60 µm, such as a d₉₀ of from about 30 µm to about 40 µm. The particle size distribution (PSD) may affect the structure and the cohesion of component A. If the PSD is too coarse, the cohesion between each component may not be sufficient. Reducing the size of the decomposable subcomponent, for example by grinding component A, may control the size of porosity created during firing. Alternatively, the decomposable component and clay may be separately sized and combined to form component A in particulate form.

The PSD may also contribute to the mechanical degradation of the ceramic end product over time.

### Component B:

Component B comprises inorganic microspheres, which function to decrease the apparent density of the ceramic end product. The microspheres have a PSD d₉₀ between about 270 and about 700 µm. The PSD of the microspheres may affect the resistance to attrition loss of the final ceramic. PSD of d₉₀ below about 270 µm may produce a ceramic product which, in bead form, has poor floatation properties. PSD of d₉₀ above about 700 µm may produce a ceramic product with poor cohesion properties. The desired PSD may be determined using any suitable sizing or classification techniques, for example sieving with an appropriately sized sieve.

Component B may have a fusion temperature of greater than about 1200 °C, such as from about 1200 to about 1500 °C, such as from about 1200 to about 1350 °C. Mullite microspheres may have a fusion temperature of above about 1400 °C. Glass microspheres may have a fusion temperature of above about 1200 °C.

The fusion temperature of the microspheres determines the maximum firing temperature of the overall composition, because the firing temperature of the composition should be lower than the fusion temperature of component B, in order to maintain the porosity and the integrity of the product.

The amount of component B in the composition may be at least about 30 wt. %, such as at least about 40 wt. %, such as from about 40 to about 45 wt. %. The floatation properties of the ceramic in bead form are especially favourable when the composition comprises at least about 40 wt. % component B. Compositions comprising less than about 20 wt. % component B may produce ceramics which have too high a density to float in water.

The microspheres may be formed of cenospheres and/or plerospheres. Cenospheres are substantially hollow spheres with an outer shell. The outer shell may be closed or partially open. Plerospheres are also substantially hollow particles, generally larger than cenospheres, and typically filled with a plurality of cenospheres.

Any inorganic microsphere may be used in the invention. For example, crystalline and/or amorphous alumina, silica, aluminosilicate, residual glass phase, and mixtures thereof may be used for the microspheres. The microspheres may comprise or consist of alumina, perlite, mullite, and combinations thereof. The microspheres may comprise or consist of perlite or mullite, such as perlite, i.e. all of the microspheres may be perlite microspheres.

Alternatively or additionally, synthetic oxide-based microspheres may be used in the invention. Expanded granular materials as defined in EP3891107A1, the contents of which are incorporated by reference, are synthetically-made oxide-based microspheres suitable for use in the invention.

Perlite comprises silicon dioxide, aluminum oxide, and a combination of other metals or metal oxides, such as sodium oxide and iron oxide. For example, perlite may comprise about 70% to about 75% SiO₂, about 12% to about 14% Al₂O₃, about 0.5% to about 2% Fe₂O₃, about 3% to about 5% Na₂O, about 4% to about 5% K₂O, about 0.4% to about 1.5% CaO (by weight), and small amounts of other metallic elements. Perlite is typically gray to green in colour with a vitreous, pearly luster, and characteristic concentric or arcuate onion skin-like (e.g. perlitic) fractures. Abundant spherical cracks can cause perlite to break into small pearl-like masses.

When heated at a high temperature (e.g., above about 750 °C or about 800 °C), the dehydrated perlite softens and at least a portion of the internal water vaporizes, which may cause the perlite to expand to a greater volume (e.g., about 5-20 times of the original volume). The vaporized water typically stretches the softened glassy material, forming small bubbles in the glassy matrix. The expanded perlite may include one or more cells, or parts of cells, in which a cell is essentially a void space partially or entirely surrounded by walls that become thinner through expansion of the glassy perlite material. If at least a portion of the expanded cells are closed and air is entrapped therein, the particles of expanded perlite may float on water.

The expansion may be performed by heating the dehydrated perlite at a temperature that is high enough to cause softening of the glassy mineral. In some cases, for expansion, the dehydrated perlite may be heated at a temperature of at least 700 °C, at least 750 °C, at least 800 °C, at least 850 °C, at least 900 °C, at least 950 °C, at least 1000 °C, at least 1100 °C, or at least 1200 °C, e.g., a temperature ranging from about 700 °C to about 1200 °C, or from about 800 °C to about 1100 °C. In some examples herein, the heating may be performed quickly, e.g., for equal to or less than 60 seconds, e.g., for a period of time ranging from about 0.1 second to about 15 seconds, or from about 0.1 second to about 5 seconds.

As used herein, the terms "sphere" or "spherical" refer to a perlite microsphere that, when magnified as a two-dimensional image, generally appears rounded and generally free of sharp corners or edges, whether or not the particle appears to be truly or substantially circular, elliptical, globular, or any other rounded shape. As a result, in addition to truly circular and elliptical shapes, other shapes with curved but not circular or elliptical outlines are considered as being a "sphere" or being as "spherical." A particulate form of perlite may also be considered to be a "sphere" or as being "spherical," even though it may have some individual particles that have agglomerated, thereby forming non-spherical agglomerates in the otherwise spherical material, or are otherwise non-spherical.

Perlite in the form of microspheres can be formed in accordance with the methods described in WO-A-2013/053635, the contents of which are hereby incorporated by reference. Generally, in this process, perlite ore and proppant is fed into an upright furnace and falls along a drop section through multiple heating zones in a furnish shaft of the furnace. The perlite ore is heated to a critical temperature at which the surfaces of the perlite plasticize and perlite grains are expanded on the basis of the propellant.

An exemplary microspherical alumina is Alodur (RTM) bubble alumina, available from Imerys Fused Minerals. Microspherical alumina, also sometimes referred to as alumina bubbles, can be produced by various methods known in the art.

Unless otherwise specified, the particle size properties referred to, for each of components A, B and C, are as measured by the well known conventional method employed in the art of laser light scattering, using a Scirocco 2000 particle size analyser, as supplied by MALVERN (or by other methods which give essentially the same result). In the laser light scattering technique, the size of particles in powders, suspensions and emulsions may be measured using the diffraction of a laser beam, based on an application of Fraunhofer and Mie theory. Such a machine provides measurements and a plot of the cumulative percentage by volume of particles having a size, referred to in the art as the 'equivalent spherical diameter' (e.s.d), less than given e.s.d values. The mean particle size d₅₀ is the value determined in this way of the particle e.s.d at which there are 50% by volume of the particles which have an equivalent spherical diameter less than that d₅₀ value. The d₁₀ value is the value at which 10% by volume of the particles have an e.s.d less than that d₁₀ value. The d₉₀ value is the value at which 90% by volume of the particles have an e.s.d less than that d₉₀ value.

The microspheres, for example, perlite microsphere, may have a d₁₀ of at least about 10 µm, for example, at least about 20 µm, or at least about 30 µm, or at least about 40 µm, or at least about 50 µm, or at least about 75 µm, or at least about 80 µm, or at least about 85 µm, or at least about 90 µm, or at least about 95 µm, or at least about 100 µm.

The microspheres, for example, perlite microspheres, may have a d₅₀ of from about 25 µm to about 500 µm, for example, from about 100 µm to about 400 µm, or from about 150 µm to about 350 µm, or from about 250 µm to about 300 µm, or from about 275 µm to about 290 µm.

The microspheres, for example, perlite microsphere, may have a d₉₀ of less than about 600 µm, for example, from about 300 µm to about 600 µm, or from about 400 µm, or at least about 600 µm, or from about 450 µm to about 550 µm, or from about 450 µm to about 500 µm.

In certain embodiments, the microspheres, for example, perlite microspheres have a d₅₀ of from about 150 µm to about 350 µm and a d₉₀ of from about 450 µm to about 550 µm. In such embodiments, component A may have a d₉₀ of from about 20 µm to about 100 µm, such as from about 20 µm to about 70 µm, and component C may have a PSD as described below, for example, a d₉₀ of from about 20 µm to about 100 µm, such as a d₉₀ of from about 30 to about 60 µm, such as a d₉₀ of from about 30 µm to about 50 µm.

### Component C:

Component C comprises an inorganic binder. Component C fulfils several functions in the ceramic.

In the ceramic end product, the binder may enclose the microspheres in a vitreous phase. This improves the mechanical strength of the ceramic compared to when no binder is used.

Component C also contributes to the abrasion resistance of the ceramic end product. In use, the ceramic may be in the form of beads, for example having a largest dimension (e.g., diameter in the case of spherical or hemispherical beads) of about 1 cm to about 5 cm, as described herein. The beads will contact each other in a turbulent environment, resulting in wear over time. The binder helps to reduce this wear.

A further benefit of component C is that it may reduce the fusion temperature of the mixture during the firing process. A reduced fusion temperature is beneficial, because the ceramic is better able to maintain structural integrity. Furthermore, reduced firing temperatures limit energy consumption of the manufacturing process and may increase mechanical resistance of the ceramic to abrasion.

Component C may suitably comprise, for example be composed of, silica. For example, component C may comprise or consist of one or more of feldspar, glass frit or wollastonite, such as felspar or glass frit. The amount of component C in the composition may be from about 5 to about 20 wt. %, for example, from about 5 to about 15 wt. %, or from about 10 to about 20 wt. %, based on the total weight of the composition.

Component C may be incorporated in the composition in any suitable form, such as particulate or fibrous, preferably particulate form.

Component C may have a particle size distribution that facilitates formation of a homogeneous mixture when components A, B and C are combined. Component C may have particle size distribution with a d₉₀ less than about 100 µm, such as a d₉₀ less than about 70 µm, such as a d₉₀ less than about 50 µm, such as d₉₀ less than about 40 µm. Component C may have a d₉₀ of at least about 10 µm, such as a d₉₀ of at least about 20 µm. Component C may have a d₉₀ of from about 20 µm to about 100 µm, such as a d₉₀ of from about 30 to about 60 µm, such as a d₉₀ of from about 30 µm to about 50 µm. The particle size distribution (PSD) may affect the structure and the cohesion of component C. If the PSD is too coarse, the cohesion between each component may not be sufficient.

### Ceramic product

The ceramic end product may have one or more of the following benefits:
Flotation in water; flotation ability retained for up to 5 years or longer; less than 10 % by mass is lost by attrition in a wastewater treatment reactor; mechanical resistance to abrasion; non-toxicity to flora and fauna in natural waterways; does not change the pH of water into which it is introduced; provides a replacement for plastic beads that are currently used in biological wastewater treatment.

The ceramic may be in any suitable shape and size for wastewater treatment. In some embodiments, the ceramic is in the form of beads. The beads may be rounded in shape, for example, spherical, hemispherical, ovoidal or ring. The beads may be spherical in shape. The beads may be hemispherical in shape. The beads may be annular in shape. The beads may comprise a mixture of different shapes. The beads may be a mixture of spheres and hemispheres. The beads may have a largest dimension of up to about 10 cm, for example, up to about 7.5 cm, or up to about 5 cm, such as from about 0.1 cm to 10 cm, or from about 0.1 cm to about 5 cm, or from about 0.1 cm to about 2.5 cm, or from about 0.1 cm to about 1.5 cm, or from about 0.25 cm to about 1.0 cm, or from about 0.5 cm to about 0.75 cm. In the case of spheres, hemispheres and rings the largest dimension is the diameter. In this form, the ceramic may be used as a replacement for plastic beads used in BAFF water treatment plants.

When added to water having an initial pH of 7.2, the ceramic beads after 15 days of soaking may cause a pH change of no greater than ± 0.2. During this time period the ceramic beads may retain their floatation properties.

After 1500 rounds of attrition loss testing as described in the examples, the ceramic beads may have a weight loss of less than about 10 %, for example, less than about 9 %, or less than about 8 %, for example, less than about 7 %, or less than about 6 %, or less than about 5 %, or less than about 4 %.

After 1500 rounds of attrition loss testing as described in the examples, the ceramic beads may have a weight loss of less of from about 0.1 % to about 8 %, for example, from about 1 % to about 7 %, or from about 2 % to about 6 %, or from about 3 % to about 5 %, or from about 3 % to about 4 %.

### Apparent density

The ceramic may have an apparent density of up to about 0.95 g/cm³. A ceramic with apparent density greater than about 0.95 g/cm³ would eventually sink in aqueous media over time as microorganisms grow on the ceramic surface, thereby causing it to increase in weight and density. The apparent density may be at least 0.50 g/cm³, such as at least 0.60 g/cm³. In some embodiments the apparent density may be from about 0.50 to about 0.95 g/cm³, such as from about 0.55 to about 0.80 g/cm³, such as from about 0.60 g/cm³ to about 0.70 g/cm³, such as from about 0.60 to about 0.75 g/cm³, such as from about 0.65 to about 0.70 g/cm³.

### Porosity

The ceramic may comprise one or both of open and closed porosity.

The ceramic may have a closed porosity of no less than about 15 wt. %, for example, no less than about 20 wt. %, such as from about 20 wt. % to about 40 wt. %, such as from about 25 wt. % to about 35 wt. %.

The ceramic may have an open porosity of up to about 50 wt. %, such as from about 5 wt. % to about 50 wt. %, such as from about 15 wt. % to about 45 wt. %, such as from about 25 wt. % to about 45 wt. %, such as from about 35 wt. % to about 45 wt. %.

The ceramic may have a total porosity, calculated as the sum of open porosity and closed porosity, of greater than about 65 wt. %. For example, the ceramic may have a total porosity of from about 65 to about 90 wt. %, such as from about 65 to about 80 wt. %, such as from about 65 to about 75 wt. %.

The ceramic may have a closed porosity of from about 20 to about 40 %, an open porosity of from about 25 wt. % to about 45 wt. % and a total porosity of from about 65 wt. % to about 80 wt. %. The ceramic may further have an apparent density of form about 0.60 g/cm3 to about 0.80 g/cm3. The ceramic may further have after 1500 rounds of attrition loss testing, as described in the examples, a weight loss of less than about 5 %, for example, from about or from about 3 % to about 5 %, or from about 3 % to about 4 %.

### Method of manufacture

Mixing of components A, B and C may be carried out by adding water to moisten the mixture, for example, to reach a final humidity of between about 25 and about 45 wt. %. The composition may be in the range of about 64:35:1 to about 20:60:20 by weight A:B:C.

The mixture may then be shaped in any suitable manner, for example, by hand molding, or using molds of appropriate size and shape. The shaped mixture may then be dried at a suitable temperature to reach a residual humidity before firing of between 0 and about 5 wt. %.

The dried and shaped mixture may then be fired.

Firing may be carried out at any suitable firing temperature. It may comprise a heating stage in which the temperature is gradually increased over a period of time, e.g., 10-40 °C/minute, for example 10-20 °C/minute, followed by holding at a maximum temperature for a period of time, followed by a cooling stage. Suitable maximum firing temperatures for perlite microspheres may be from about 900 °C to about 1200 °C, for example, from about 900 °C to about 1100 °C, or from about 1000 °C to about 1200 °C, or from about 1000 °C to about 1100 °C. Suitable maximum firing temperatures for mullite microspheres may be from about 900 °C to about 1400 °C, for example, from about 900 °C to about 1300 °C, or from about 1000 °C to about 1200 °C, or from about 1000 °C to about 1100 °C.

The firing time may be at least about 20 minutes, for example, at least about 40 minutes, for example, at least about 60 minutes, or at least about 80 minutes, or at least about 100 minutes, for example, from about 20 minutes to about 180 minutes, for example, from about 20 minutes to about 150 minutes, or from about 30 minutes to about 120 minutes. The firing time is the period of time for which the temperature is held at the maximum firing temperature, excluding heating up and cooling down.

### EXAMPLES

### Example 1

The effect of the relative ratio of component A to component C on mass loss by attrition was measured. A modified version of the test method described in EN 12902:2004, Annex A, was used.

In this modified method, approximately 10 mL of the ceramic beads are placed in a 50 mL flask. The total weight of the beads is measured. The flask was put in rotation by an electric motor (Turbula) with a speed of 25 rpm. The weight loss of the ceramic beads was measured after 750 rounds. A further 750 rounds were then completed and the weight loss measured again. A further 750 rounds were then completed and the weight loss measured again.

Weight loss (%) is calculated as the difference between the initial weight of the ceramic beads and after the 750 rounds and after 1500 rounds.

This method may be referred to as the "attrition loss method".

It is desirable to minimize the mass loss due to inter-bead abrasion so that the beads in a BAFF do not need frequent replacement, for both economical and environmental benefits.

Component A is clay, sourced from Imerys Devon ball clay quarry, with decomposable content of about 30 wt.% lignite. Component B is perlite microspheres, commercially available as ImerCare^{®} 400P-Scrub, with a PSD d₅₀ of 280 µm and d₉₀ < 500 µm. Component C is glass frit, commercially available as ES60005030-3 from Fritta, S.L. (Spain). The three components A, B and C are mixed together with water to achieve 35 wt.% of relative humidity. The mixture is hand-mixed to reach a homogeneous mixture, then hand-moulded into hemispherical mould with a diameter of 0.6 cm. The moulded beads are dried overnight at a temperature of 105 °C in a temperature-controlled oven. The dried beads obtained are then fired 30 minutes at the maximum temperature of 950 °C with a heating rate of 40 °C/min.

**Table 1**

| Component A, wt. % | Component B, wt. % | Component C, wt. % | % mass loss at 750 revolutions | % mass loss at 1500 revolutions | % mass loss at 2250 revolutions |
|---|---|---|---|---|---|
| 45 | 50 | 5 | 4.61 | 8.78 | 12.72 |
| 40 | 50 | 10 | 3.38 | 6.13 | 8.62 |

Increasing the amount of component C relative to component A (inorganic binder to clay with decomposable content) decreases the amount of mass lost from the ceramic over time due to attrition.

### Example 2

The methodology of Example 1 was repeated with different compositions with a weight ratio A:B:C of 50:50:0, 45:50:5 and 40:50:10. In this example, components A, B and C were similar to the ones in Example 1.

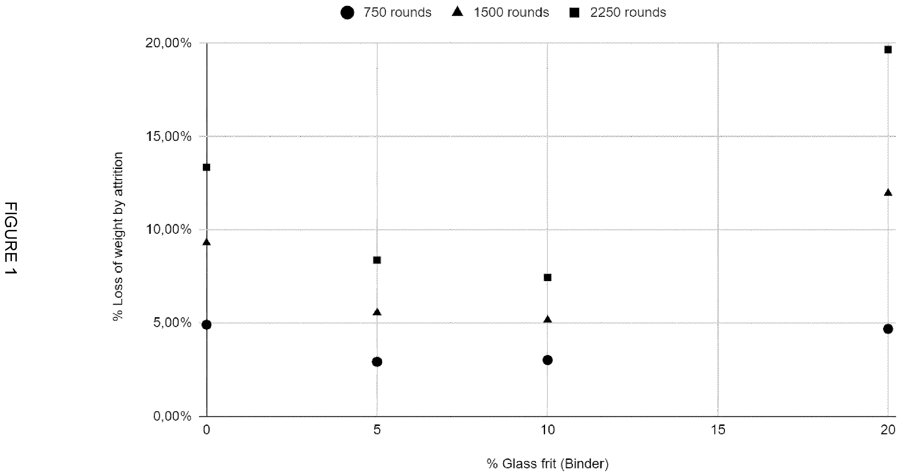

The results are shown in Figure 1.

### Example 3

The effect of firing conditions on attrition loss was investigated. The methodology in Example 1 for measuring weight loss was followed.

The composition tested had a weight ratio A:B:C of 50:40:10. In this example, components A, B and C were similar to the ones in Example 1.

Samples were fired at 950 °C for 30 minutes or 120 minutes, or at 1100 °C for 30 minutes or 120 minutes. The samples fired at 1100 °C had poorer floating ability than the samples fired at 950 °C. Within the samples fired at 950 °C, a longer firing time gave a better wear resistance of the ceramic.

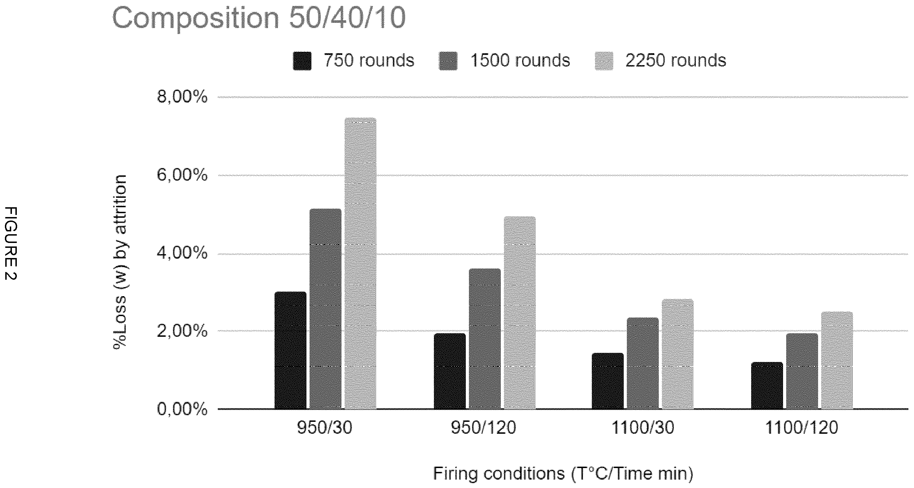

The results are illustrated in Figure 2.

### Example 4

The methodology of example 1 was repeated for two compositions in which the mixing ratio of A:B:C is 60/40/0 (composition (1)) and 50/40/10 (composition (2)), except that the dried beads obtained are fired for 120 minutes at the maximum temperature of 950 °C with a heating rate of 40 °C/min.

The mass loss by attrition, the apparent density, and the open and closed porosities were measured.

The results are illustrated in Table 2.

**Table 2**

| | Composition (1) | Composition 2 |
|---|---|---|
| Component A, wt. % | 60 | 50 |
| Component B, wt. % | 40 | 40 |
| Component C, wt. % | 0 | 10 |
| % mass loss at 750 revolutions | 2.75 | 2.13 |
| % mass loss at 1500 revolutions | 4.68 | 3.8 |
| % mass loss at 2250 revolutions | 6.89 | 4.95 |
| Apparent density (g/cm³) | 0.53 | 0.68 |
| Open porosity (wt.%) | 52.4 | 41.2 |
| Closed porosity (wt.%) | 18.6 | 29.9 |

## Claims

1. Composition for production of a ceramic for wastewater treatment, the composition comprising the following components:
A. clay comprising from about 0.1 to about 50 wt. % decomposable content, based on the total weight of the clay, wherein the decomposable content is decomposable during a firing process; wherein component A has a particle size distribution, d₉₀, of less than about 50 µm;
B. inorganic microspheres, wherein the microspheres have a particle size distribution, d₉₀, of from about 270 µm to about 700 µm; and
C. inorganic binder, optionally wherein component C has a particle size distribution, d₉₀, of from about 20 µm to about 100 µm;
wherein component B is present in the composition in an amount of from about 20 to about 60 wt. %.

2. Composition according to claim 1, wherein component A comprises from about 5 to about 30 wt. % decomposable content, such as from about 10 to about 30 wt. % decomposable content, such as from about 20 to about 30 wt. % decomposable content.

3. Composition according to claim 1 or claim 2, wherein the decomposable content in component A comprises one or more of coal, diatomaceous earth, calcium carbonate, magnesium carbonate, magnesium oxide, and carbides, such as one or more of lignite, sub-bituminous, bituminous, and anthracite.

4. Composition according to any preceding claim, wherein component B has a fusion temperature of at least about 1100 °C, such as from about 1100 to about 1250 °C.

5. Composition according to any preceding claim, wherein component B is perlite microspheres.

6. Composition according to any preceding claim, wherein component C comprises silica, for example, component C is feldspar and/or glass frit and/or raw perlite.

7. Composition according to any preceding claim, wherein component C is present in the composition in an amount of from about 5 to about 20 wt. %.

8. Ceramic for wastewater treatment obtained from a composition according to any one of claims 1-7, optionally having an apparent density of no greater than about 0.95 g/cm³, optionally wherein the ceramic has an apparent density of at least about 0.5 g/cm³.

9. Ceramic for wastewater treatment having an apparent density of no greater than about 0.95 g/cm³, optionally wherein the ceramic has an apparent density of at least about 0.5 g/cm³, wherein the ceramic has a closed porosity of no less than about 15 wt. %.

10. Ceramic according to any of claims 8 to 9, in the form of beads.

11. Ceramic according to any of claims 8 to 10, having one or more of the following features:
a. an attrition loss of less than about 8 wt. %;
b. a total porosity of greater than about 65 wt. %;
c. closed porosity of less than about 40 wt. %;
d. a water absorption index of from about 30 to about 65 wt. %;
e. an apparent density of less than about 0.75 g/cm³.

12. Use of the ceramic of any of claims 8 to 11 for treating wastewater.

13. Process for making a ceramic, the process comprising mixing components A, B and C as defined in claim 1 or any of claims 2-7 with water to form a shapable mass; followed by shaping, drying and firing to form a ceramic.

14. Process according to claim 13, wherein the firing temperature is no greater than about 1200 °C, such as no greater than about 1100 °C.

15. Method of treating wastewater, comprising fluidizing a ceramic according to any of claims 8 to 11 with wastewater and air in a biological aerated flooded filter system.
